# EUROPEAN PATENT SPECIFICATION

(11) **EP 2 816 781 B1**
(45) Date of publication and mention of the grant of the patent: **20.01.2021**
(21) Application number: 13173115.0
(22) Date of filing: 20.06.2013
(51) Int. Cl.: H04L 29/08, H04M 1/60, H04W 4/48

(54) **BEHAVIOUR BASED ON PAIRED DEVICE IDENTIFICATION**
VERHALTEN BASIEREND AUF DER IDENTIFIZIERUNG EINER VERKNÜPFTEN VORRICHTUNG
COMPORTEMENT SUR LA BASE D'IDENTIFICATION DE DISPOSITIFS APPARIÉS

(43) Date of publication of application: 24.12.2014
(73) Proprietor: BlackBerry Limited, Waterloo, ON N2K 0A7 (CA)
(72) Inventor: Nathwani, Sanjai, Mississauga, Ontario L4W 0B5 (CA); Duffy, Charles Angus, Waterloo, Ontario N2K 0A7 (CA); Jugdeo, Devendra, Waterloo, Ontario N2K 0A7 (CA); Stirrett, Allan Jeffrey, Waterloo, Ontario N2K 0A7 (CA)
(74) Representative: Hanna Moore + Curley

(56) References cited:
- EP-A1- 1 729 090
- EP-A2- 2 466 262
- US-A1- 2007 182 532
- US-A1- 2007 203 646
- US-A1- 2011 009 107
- US-A1- 2012 172 012
- US-A1- 2013 046 510
- Wikipedia: "Bluetooth", , 30 December 2012 (2012-12-30), XP055269573, Retrieved from the Internet: URL:https://en.wikipedia.org/w/index.php?t itle=Bluetooth&oldid=530426233 [retrieved on 2016-04-29]

## Description

### TECHNICAL FIELD

The present disclosure relates to pairing of electronic devices and in particular to behaviour of a mobile device when connected to another paired electronic device.

### BACKGROUND

The pairing of mobile devices, such as smartphones or tablet devices, with other electronic devices, such as in-vehicle infotainment systems, can provide hands-free access, data access, and communication functions from the mobile device through the vehicle control interfaces. The communications protocols between the mobile device and in-vehicle infotainment system can enable a range of resources to be shared and accessed. However, the user of the vehicle may still utilize the mobile device while in the vehicle and not necessarily be aware of the device pairing with the in-vehicle infotainment system. In addition the user may not be aware of the services of the mobile device that are available via the in-vehicle infotainment system.

Accordingly, systems and methods that enable behaviour based paired device identification remain highly desirable.

EP1729090 relates to a portable information processor including a storage unit that stores information; a connecting unit that connects to one of the device ; an information acquiring unit that acquires information from the connected device ; an operation information generating unit supplied with a driving power from a power source of the connected device and generating operation information relating to the predetermined operation executable by the connected device based on device identification information and the acquired information acquired by the information acquiring unit and the information stored in the storage unit ; and a control unit that controls the connected device based on the operation information generated by the operation information generating unit.

US 2007 /182532 relates to music information is output to an operator, such as a vehicle operator, through the use of a portable electronic device. The operator's behavior may be determined on the basis of data received from one or more systems of a moving object which is being controlled or otherwise operated by the operator. One or more individual pieces (or playlists) of music may be respectively stored as music information, for example, corresponding to different detected behaviors or moods of the operator and/or the operation conditions.

US 2007 /203646 describes an image correction method and system for navigation device with portable navigation unit which converts an image based on projection to a first display into a suitable image on a second display such that the area of the second display is used economically and efficiently while maintaining some elements of the image in substantially common aspect ratio between the images on the first display and on the second display. The image correction method determines the ratio of the second display, determines if image correction is required, and checks a correction table and performs image correction according to correction rules to generate the corrected image for projecting on the second display.

US2012/172012 discloses a method for controlling a mobile communications device paired with a telematics unit of a vehicle via a short range wireless communication. According to the disclosed method, in response to receiving an incoming text message at the mobile device, a text messaging management strategy is implemented via the telematics unit and/or the mobile device. The text messaging management strategy is executable via an application that is resident on the mobile device.

### SUMMARY

Aspects of the present disclosure are set out in the appended claims.

### BRIEF DESCRIPTION OF THE DRAWINGS

Further features and advantages of the present disclosure will become apparent from the following detailed description, taken in combination with the appended drawings, in which:
FIG. 1 shows a representation of a paired in-vehicle infotainment system and a mobile device;
FIG. 2 shows a representation of a display screen on a mobile device when paired to the in-vehicle infotainment system;
FIG. 3 shows a representation of a system for retrieving information for display on the mobile device in relation to the paired in-vehicle infotainment system;
FIGs. 4A to 4C shows a representation of a display screen on a mobile device for receiving further vehicle identification during the initial pairing process;
FIG. 5 shows a method flow of mobile device behaviour based on paired device identification;
FIG. 6 shows a method of mobile device behaviour based on paired device identity information; and
FIG. 7 shows an alternative method of mobile device behaviour based on paired-device identity information.

It will be noted that throughout the appended drawings, like features are identified by like reference numerals.

### DETAILED DESCRIPTION

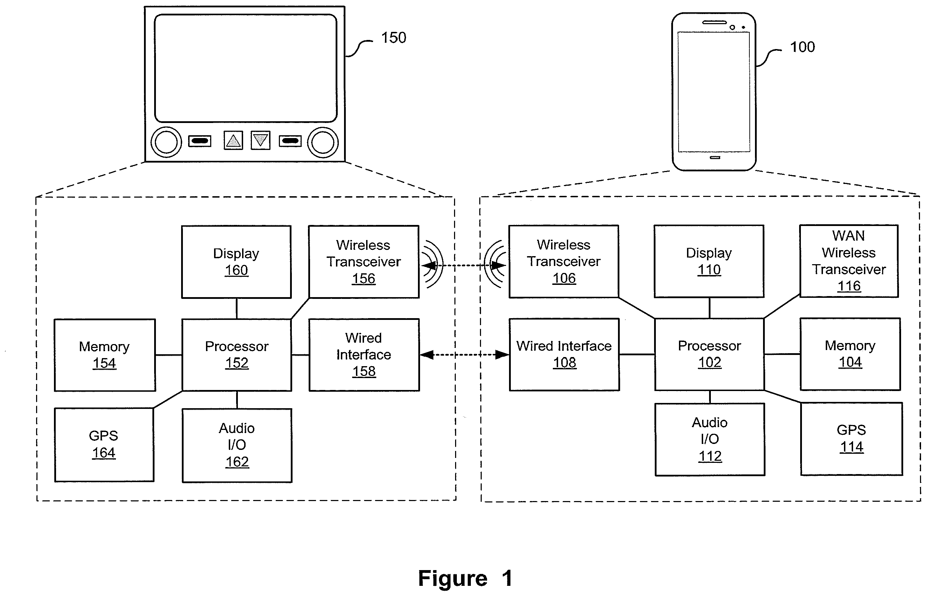

Embodiments are described below, by way of example only, with reference to Figures 1-7.

Figure 1 shows a representation of a paired in-vehicle information and entertainment (infotainment) system 150 or head unit and a mobile device 100. The in-vehicle infotainment system 150 can provide rear-seat entertainment (such as movies, games, TV, social networking, etc.), navigation, audio playback (AM/FM, CD, DVD, HDD, satellite radio, internet radio), location-based services and external communications services and is accessed via control interfaces integrated in the vehicle or a touch-screen interface. The mobile device 100, such as a smartphone or tablet computing device, can pair with an in-vehicle infotainment system (IVIS) 150 to provide data connectivity between devices and enable services or functions of the IVIS 150. The mobile device 100 may be built on a mobile operating system providing advanced computing capability and connectivity for communications, accessing content and playback of media content via a wireless network.

The pairing of the mobile device 100 to the IVIS 150 provides a secure communication connection to enable services or functionality of the mobile device 100 to be accessed via the IVIS 150. Services such as SMS, MMS, voice, video, e-mail and access content stored on the mobile device 100 or accessible by the mobile device via a network interface, in various formats can be provided. The content formats may be such as, but not limited to, AAC, AMR, FLAC, MP3, M4A, OGG, WMA, WAV, Video, 3GP, AVI, ASF, MP4, MOV and WMV. The pairing may be performed by a wireless technology such as Bluetooth® (Bluetooth is a trademark of the Bluetooth SIG of Kirkland, WA) or Wi-Fi® (Wi-Fi is a registered trademark of Wi-Fi Alliance of Austin, TX) or by wired technology such as Universal Serial Bus (USB), Firewire™, IEEE 1394, or Thunderbolt™ connections implementing a pairing protocol. During the pairing process the mobile device 100 obtains identification information from the in-vehicle information system 150 which may be related to the type of vehicle. Paired-device identity information may be discerned from a received device identifier, such as a device address or text identifiers such as a device label provided during the pairing process. If the device information in the device identifier is not sufficiently unambiguous to identify the vehicle during pairing the mobile device 100, but can be identified as being associated with a vehicle, selection options can be provided for the user to further identify the vehicle (e.g. by providing a pick list) to disambiguate the identity. Once the paired-device identity information is known it can be stored on the mobile device 100 and used to determine behaviour of the mobile device 100 on future pairing with the in-vehicle communication system 150.

When the mobile device 100 is connected to the IVIS 150 an information display screen can be presented on the mobile device 100 to identify that a connection has been established and identify services that are provided between the IVIS 150 and the mobile device 100. The information display screen may be in the form of a dismissible splash screen or a lock screen to discourage interaction with the mobile device 100 while connected to the IVIS 150 thereby potentially mitigating driver distraction. The information display can also include a list of services available for interacting with the mobile device 100 or supported by the vehicle. In addition, information from applications that can be executed on the device or data received from the vehicle such as telematics received from the vehicle can be displayed. The pairing of the mobile device 100 with the IVIS 150 and the paired-device identity information can also be associated with profile defining pairing behaviour. The profile may for example be associated with a label such as "My Car" on the mobile device 100.

The mobile device 100 comprises a processor 102 coupled to a memory 104. The memory 104 contains instructions for providing an operating system, databases, and communication functions such as pairing to the IVIS 150 by establishing a connection by one or more interfaces such as a wireless transceiver 106 or wired interface 108. The memory may also provide instructions for storing or retrieving or data, applications and media content. The wireless transceiver 106 may support one or more personal area network (PAN) technologies such as Bluetooth®, near field communications (NFC), or local area networks (LAN) based technologies such as IEEE 802 family of technologies such as Wi-Fi®. The mobile device 100 also provides a display 110, which can provide a touch-sensitive input to the operating system. A wide area network (WAN) wireless transceiver 116 is provided to access mobile networks GSM, EDGE, UMTS/UTRA, 3G (3GPP), and 4G (LTE) and beyond. Audio input and output functions 112 such as speaker and microphone are incorporated into the mobile device 100. In addition a Global Position System (GPS) or Global Navigation Satellite System (GNSS) receiver 114 may be provided for location services and navigation.

The IVIS 150 comprises a processor 152 coupled to a memory 154. The memory 154 contains instructions for providing an operating system and communication functions such as pairing to the mobile device 100 by establishing a connection by one or more interfaces such as a wireless transceiver 156 or wired interface 158. The wireless transceiver 156 may support one or more personal area networks (PAN) technologies such as Bluetooth®, NFC, or local area networks (LAN) based technologies such as IEEE 802 based Wi-Fi®. The IVIS 150 also provides a display 160, which can provide a touch-sensitive input or may also have physical interfaces as a button or dials. In addition a Global Position System (GPS) or Global Navigation Satellite System (GNSS) receiver 164 may be provided for location services and navigation. Audio input and output functions 162 such as speaker and microphone are also incorporated. The IVIS 150 can provide communications functions from the mobile device 100 once paired, for example hands-free call access, media playback, short message service (SMS) functions can be interfaced through the IVIS 150.

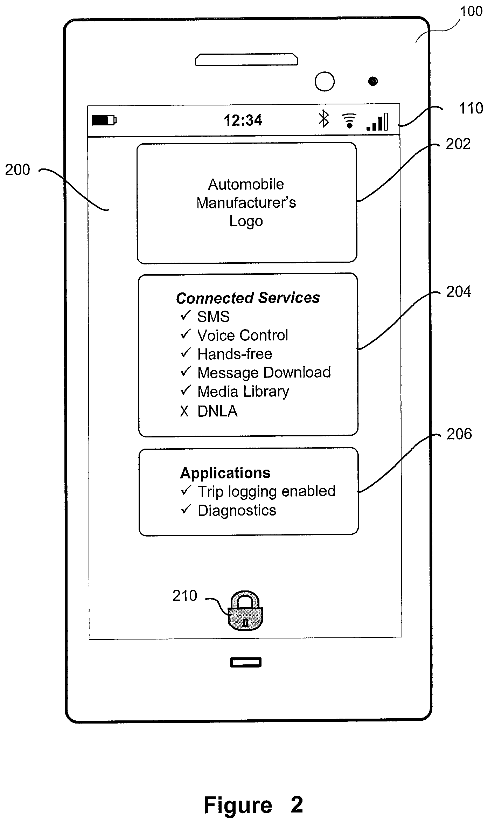

Figure 2 shows a representation of display screen on a mobile device 100 when connected to the IVIS 150. The display screen 200 is generated when a device identifier provided from the IVIS 150 matches to a defined behaviour or behaviour profile on the mobile device 100. The screen 200 that is displayed on the mobile device 100 while connected to the IVIS 150 presents information relevant to user in regards to the device pairing. One or more items may be displayed such as but not limited to an automobile manufacturer 202 identifier such as a logo, a list of services 204 that are provided by the pairing, or identification of the services that are connected or are supported but not currently connected. Applications or services 206 that may be provided by the mobile device 100 may also be identified, for example telemetry, logging functions, or mapping functions that are integrated with the IVIS 150 functions. The services that may be identified may include, for example, SMS, MMS, voice control, hands-free, message download, media library accesses, DNLA support, Mirrorlink™, etc. When the mobile device 100 is connected to the IVIS 150 the screen of the mobile device 100 may be locked, which can be identified by an icon 210 to limit user access to functions of the mobile device 100 when in the vehicle. Alternatively the screen 200 may be dismissed by a touch or gesture input. The locking of the display 110 may alternatively only occur when the vehicle is moving therefore selectively enabling access to functions directly on the mobile device 100 when the vehicle is in park or stopped. The IVIS 150 may provide information regarding the operation of the vehicle to the mobile device 100 which may result in different aspects to be displayed on the mobile device 100 based upon the associated behaviour profile. The display screen 200 formatting and content can also be determined by user configuration, provided by the mobile device operating system or the auto manufacturer as a default behaviour.

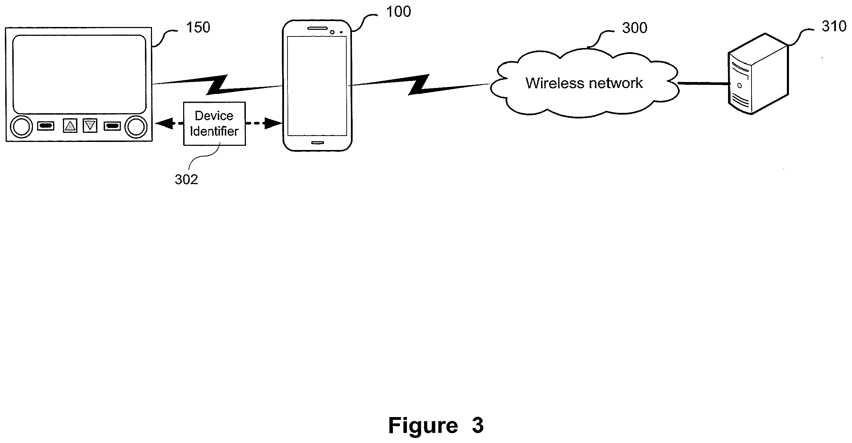

Figure 3 shows a representation of a system for retrieving information for display on the mobile device 100 in relation to the connected IVIS 150. During the initial pairing of the mobile device 100 to the IVIS 150, device identifiers 302 are exchanged to uniquely identify each device in establishing the communications link. The device identifiers 302 are subsequently used to establish connections between the devices and are stored on each device. The device identifier 302 may include additional information to identify the type of device, a manufacturer or product identifier, software features, and version information to enable each device to configure appropriately or may only be discernible to the fact that a vehicle is associated with the device identifier 302. The mobile device 100 may provide the device identifier 302 provided by the IVIS 150 to a server 310 via a wireless network 300 to request associated or corresponding configuration or behaviour profile, or the mobile device 100 may maintain a database which can be periodically updated. The behaviour profiles can be associated with individual or groups of identifier and may also be associated with information such as for example, icons, logos or graphics, display formatting options, locking behaviours and services that can be provided by the IVIS 150 and the mobile device 100. The mobile device 100 may also be configured to provide default behaviour based upon identification that a particular device identifier 302 is associated with a vehicle when connected.

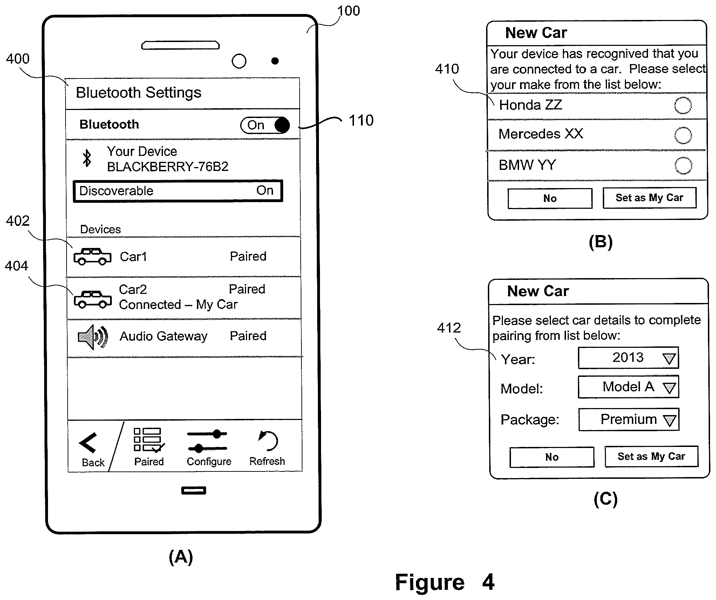

Figure 4 shows a representation of a display screen on a mobile device 100 for receiving further vehicle identification during the initial pairing process. During the pairing process the IVIS 150 may be able to identify that the received device identifier 302 is associated with a vehicle. The paired device 402 may be identified based upon the type of connection provided; for example, 402 identifies that the device is paired to 'Car1'. The device identifier 302 may provide additional levels of detail, for example identify the make, year of manufacture, brand, model and option packages is so implemented in the identifier. If the device identifier 302 does not provide sufficient identification information, but can be at least identified as a vehicle, additional pairing screens or pop-ups such as in Figure 4B and 4C may be displayed to allow the user to provide additional selection input. Depending on the type of behaviour profile that can be defined based on the device identifier 302 granularity, different selections may be presented. For example if the IVIS 150 is used by multiple vehicle manufacturers, selections as shown in screen 410 may be provided to narrow the vehicle manufacturer. If the vehicle manufacturer is known further details such as year, model, and package as shown in screen 412 may be presented. The screens 410 and 412 may be presented during the initial pairing process or on subsequent connections as further behaviour profiles are generated that may require the information or as additional information is provided. The in-vehicle infotainment device 150 can then be associated with one or more behaviours on the mobile device 100. The device identifier 302 and associated vehicle may then be labelled, in this example as 'My Car', providing identification that the mobile device 100 has a behaviour associated with the vehicle when connected. If two device identifiers 302 are similar, additional device identification information such the device identifier address (e.g. media access control (MAC) address) may be utilized to distinguish between the two paired devices and enable behaviour to be tailored to individual vehicles.

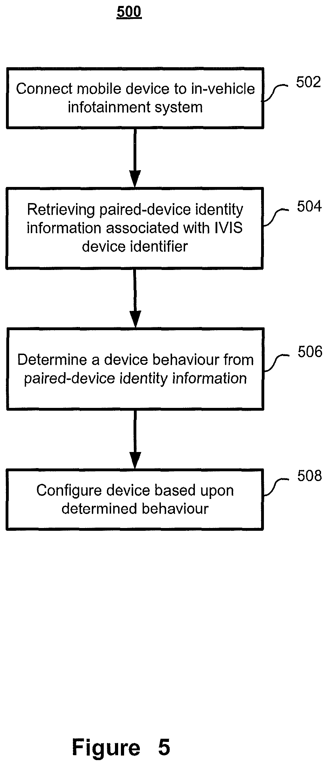

Figure 5 shows a method of mobile device 100 behaviour based on paired device identification. The method 500 is provided on the mobile device 100 when connecting with an IVIS 150. When a mobile device 100 connects with the IVIS 150 to create a communications channel which requires device identifiers 302 to be exchanged, the device identifiers 302 can associated with identity information that was provided during pairing such as but not limited to device name, device class, list of services, technical information (for example: device features, manufacturer, specification used, clock offset) such as defined in the Bluetooth® specification to enable the communication channel to be configured appropriately. This information may be maintained by each device to enable subsequent network connections as required to remember configuration parameters and enable automatic connection. The mobile device 100 can utilize the device identifier 302 to determine how it will behave when connected to the paired IVIS 150. By defining behaviour that is to occur when connected with an IVIS 150, the mobile device 100 can provide information identifying which services are available through the IVIS 150, enable or disable functions of the mobile device 100 and also lock the mobile device 100 to discourage user access while connected. The mobile device 100 connects to the IVIS 150 during connection establishment and receives an IVIS device identifier (502). Paired-device identity information is retrieved that is associated with an IVIS device identifier 302 (504). A device behaviour can then be determined from the paired-device identity information (506) and the mobile device 100 can be configured based upon the determined behaviour (508). The behaviour may be a single action or may be defined by a behaviour profile such as displaying information pertaining to the vehicle on the display of the mobile device 100. The behaviour may be identified when the device identifier 302 has been labelled by the user, for example 'My Car'.

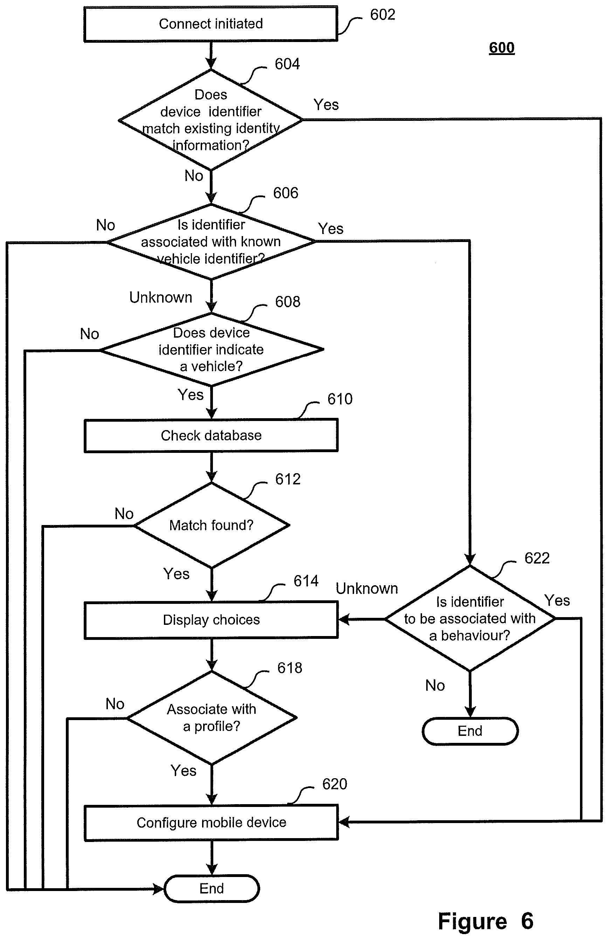

Figure 6 shows a method of mobile device 100 behaviour based on paired-device identity information. Connection of the IVIS 150 with the mobile device 100 is initiated through user interaction with the IVIS 150 and mobile device 100 (602). During establishment of the connection a device identifier 302 is received from the IVIS 150 by the mobile device 100. The device identifier 302 may include a device address or a communications profile. Device identity information may be provided during the pairing establishment which may have been previously performed or provided as part of the connection initiation. If the device identifier 302 matches paired device identity information of an existing defined behaviour or behaviour profile, (Yes at 604) the mobile device 100 is configured based upon one or more actions defined by the behaviour or behaviour profile (620). If the device identifier 302 does not match an existing profile (No at 604), it is determined if the device identifier 302 is associated with a known vehicle or IVIS device identifier identity information (606) either by labels received in the pairing process such as in a communication profile, or based on a device identifier address that is known to be associated with a particular vehicle manufacturer and therefore likely an IVIS. If the device identifier 302 can be identified associated with a vehicle (Yes at 606) it is then determined if it is to be associated with a particular behaviour or behaviour profile, which may for example be associated with a label on the mobile device 100 such as 'My Car'. If the device identifier 302 is associated with a behaviour (Yes at 622), the behaviour or behaviour profile is applied, if not (No at 622) regular device pairing can occur. If a device identifier 302 does not provide sufficient information to identify the vehicle, and therefore it is unknown if it should be associated with a behaviour (Unknown at 622) further choices or parameter selections can then be presented (614) for the user to select parameters from to refine the paired device identity information. Once user selections have been made, the user may then associate the device identifier 302 with a behaviour or behaviour profile. If a selection is made (Yes at 618) the mobile device 100 can then be configured based upon the pairing (620). If the device identifier 302 is not associated with a profile (No at 618), regular device pairing can occur.

If the device identifier 302 is not associated with a known automaker (No at 606) the pairing will continue as per regular connection establishment or initial pairing. If the device identifier 302 is not associated with a known vehicle device identifier 302 (Unknown at 606) the device identifier 302 is further analyzed to determine if it indicates that it is associated with a vehicle. If the device identifier 302 does not indicate that it is associated with a vehicle (No at 608) as determined by characteristics such as the protocols supported or interfaces provided by the device, the connection will continue as per regular connection establishment or initial pairing. If device identifier 302 does indicate it is associated with a vehicle (Yes at 608) a database lookup (610) may be performed to determine if further information can be used to refine the device identity information to be associated with the device identifier. The database may be resident on the mobile device 100 or accessed remotely to a server 310. If a match is found to the device identifier 302 (Yes at 612), selection choices may be displayed to the user (614) to confirm the pairing. If a match is not found (No at 612) it is assumed that regular connection or pairing should occur and the device is not associated with an IVIS 150. Once user selections have been made, the user may then associate the device identifier 302 with a behaviour or behaviour profile, for example by applying a label to the behaviour. If a selection is made (Yes at 618) the mobile device 100 can then be configured based upon the pairing (620). If device identifier 302 is not associated with a profile (No at 618), the process continues as per regular connection establishment or initial pairing.

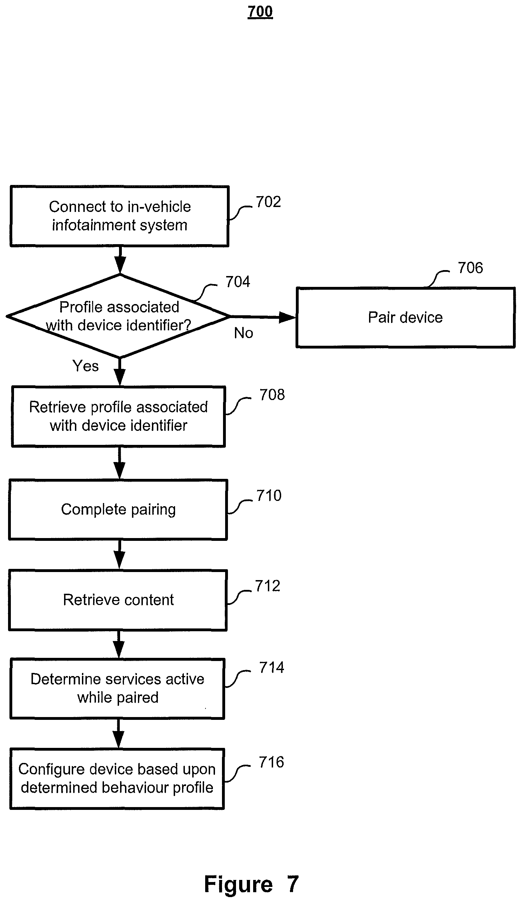

Figure 7 shows an alternative method mobile device behaviour based on paired-device identity information. The method 700 assumes that the mobile device 100 has already been paired with an IVIS 150. An IVIS 150 device identifier 302 is received by the mobile device 100 (702) during the connection initiation. If an existing pairing behaviour profile is not associated with the received device identifier 302 (NO at 704) regular pairing of the device will occur (706). If a profile is associated with the device identifier 302 (YES at 704) the behaviour profile is retrieved, or the parameters associated with the profile are determined (708). The connection between the devices is completed (710) to establish a communication link between the mobile device 100 and the IVIS 150. Depending on the behaviour profile, content may be retrieved from memory of the mobile device 100 or remotely, for display on the mobile device 100 (712). The content may be items such as graphics, icons, applications or notification that are required to implement the profile. If services that are associated with the connection are to identified on the mobile device 100 they may be determined (714) either based upon the services identified in the behaviour profile or by polling or publishing mechanism. The display of the mobile device 100 is then configured to identify information pertaining to the in-vehicle infotainment connection (716). The behaviour profile may also configure resources of the mobile device 100 for example by disabling applications or functions not required while connected to the paired IVIS such as GPS, data, network access setting, running applications, or implementing power saving features.

Although certain methods, apparatus, computer readable memory, and articles of manufacture have been described herein, the scope of coverage of this disclosure is not limited thereto. To the contrary, this disclosure covers all methods, apparatus, computer readable memory, and articles of manufacture fairly falling within the scope of the appended claims.

Although the following discloses example methods, system and apparatus including, among other components, software executed on hardware, it should be noted that such methods, system and apparatus are merely illustrative and should not be considered as limiting. For example, it is contemplated that any or all of these hardware and software components could be embodied exclusively in hardware, exclusively in software, exclusively in firmware, or in any combination of hardware, software, and/or firmware. Accordingly, while the following describes example methods and apparatus, persons having ordinary skill in the art will readily appreciate that the examples provided are not the only way to implement such methods, system and apparatus.

## Claims

1. A method on a mobile device (100) comprising:
receiving an IVIS device identifier associated with an in-vehicle infotainment system, IVIS, (150) during initial pairing of the IVIS with the mobile device;
determining and storing, at the mobile device, paired-device identity information associated with the IVIS device identifier;
connecting (502) the mobile device (100) with the IVIS (150);
retrieving (504) the stored paired-device identity information associated with the IVIS device identifier (302) received from the IVIS (150);
responsive to retrieving the paired-device identity information, determining (506) a mobile device behaviour from the retrieved paired-device identity information wherein the determined device behaviour is associated with a behaviour profile, the behaviour profile defining one or more actions to be performed by the mobile device when paired to the IVIS (150);
based upon the one or more actions defined by the behaviour profile associated with the determined device behaviour:
identifying available services (204) of the mobile device (100) that are accessible via the IVIS (150) based on services identified in the behaviour profile ;
retrieving content for a lock screen (200) on a display (110) of the mobile device (100) when connected to the IVIS (150), the lock screen (200) identifying the available services (204); and
displaying the lock screen (200) on the display (110) of the mobile device (100).

2. The method of claim 1, wherein, based upon the one or more actions defined by the behaviour profile associated with the determined device behaviour, the method further comprises:
disabling applications of the mobile device (100) not required while the mobile device (100) is connected with the IVIS (150).

3. The method of claim 1, wherein, based upon the one or more actions defined by the behaviour profile associated with the determined device behaviour, the method further comprises:
identifying applications (206) that can be executed on the mobile device (100) while the mobile device (100) is connected with the IVIS (150); and
retrieving further content for the lock screen (200) on the display (110) of the mobile device (100), such that the displayed lock screen (200) further identifies the applications (206).

4. The method of claim 1, wherein, based upon the one or more actions defined by the behaviour profile associated with the determined device behaviour, the method further comprises:
receiving data from the IVIS (150); and
retrieving further content for the lock screen (200) on the display (110) of the mobile device (100), such that the displayed lock screen (200) further presents the data received from the IVIS (150).

5. The method of claim 1 wherein the paired-device identity information further comprises one or more parameters selected from: a manufacturer, a model, a year, and a package.

6. The method of claim 5 wherein at least a portion of the paired-device identity information is determined by prompting a user of the mobile device to select one or more parameters.

7. The method of claim 1 wherein, based upon the one or more actions defined by the behaviour profile associated with the determined device behaviour, the method further comprises:
retrieving content for the lock screen (200) on the display (110) of the mobile device (100), such that the displayed lock screen (200) further comprises a logo (202) of an auto manufacturer identified by the paired-device identity information.

8. The method of any one of claims 1 to 7 wherein the connecting of the mobile device (100) to the IVIS (150) is performed wirelessly.

9. The method of claim 8 wherein the connecting of the mobile device to the IVIS is performed over Bluetooth®.

10. The method of claim 8 wherein the connecting of the mobile device to the IVIS is performed over Wi-Fi® direct.

11. A wireless device (100) arranged to perform the method of any preceding claim.

12. A non-transitory computer-readable memory (104) having computer-readable code embodied thereon, the code when executed by a processor (102) of a mobile device (100) causing the mobile device (100) to perform the method of any of claims 1 to 10.

## Patentansprüche

1. Verfahren auf einer mobilen Vorrichtung (100), Folgendes umfassend:
Empfangen einer IVIS-Vorrichtungskennung, welche während des anfänglichen Koppelns des IVIS mit der mobilen Vorrichtung einem fahrzeuginternen Infotainment-System (IVIS) (150) zugeordnet wird;
Bestimmen und Speichern, an der mobilen Vorrichtung, von Vorrichtungskopplungs-Identitätsinformationen, welche der IVIS-Vorrichtungskennung zugeordnet sind;
Verbinden (502) der mobilen Vorrichtung (100) mit dem IVIS (150);
Abrufen (504) der gespeicherten Vorrichtungskopplungs-Identitätsinformationen, welche der IVIS-Vorrichtungskennung (302) zugeordnet sind, die von dem IVIS (150) empfangen wurden;
als Reaktion auf das Abrufen der Vorrichtungskopplungs-Identitätsinformationen, Bestimmen (506) eines mobilen Vorrichtungsverhaltens aus den abgerufenen Vorrichtungskopplungs-Identitätsinformationen, wobei das bestimmte Vorrichtungsverhalten einem Verhaltensprofil zugeordnet ist, wobei das Verhaltensprofil eine oder mehrere Aktionen definiert, welche durch die mobile Vorrichtung auszuführen sind, wenn diese mit dem IVIS (150) gekoppelt ist;
basierend auf der einen oder den mehreren Aktionen, welche durch das Verhaltensprofil definiert sind, welches dem bestimmten Vorrichtungsverhalten zugeordnet ist:
Identifizieren von verfügbaren Diensten (204) der mobilen Vorrichtung (100), welche über das IVIS (150), basierend auf in dem Verhaltensprofil identifizierten Diensten, zugänglich sind;
Abrufen von Inhalten für einen Sperrbildschirm (200) auf einer Anzeige (110) der mobilen Vorrichtung (100), wenn diese mit dem IVIS (150) verbunden ist, wobei der Sperrbildschirm (200) die verfügbaren Dienste (204) identifiziert; und
Anzeigen des Sperrbildschirms (200) auf der Anzeige (110) dermobilen Vorrichtung (100).

2. Verfahren nach Anspruch 1, wobei das Verfahren, basierend auf der einen oder den mehreren Aktionen, welche durch das Verhaltensprofil definiert sind, welches dem bestimmten Vorrichtungsverhalten zugeordnet ist, ferner Folgendes umfasst:
Deaktivieren von Anwendungen der mobilen Vorrichtung (100), welche nicht erforderlich sind, während die mobile Vorrichtung (100) mit dem IVIS (150) verbunden ist.

3. Verfahren nach Anspruch 1, wobei das Verfahren, basierend auf der einen oder den mehreren Aktionen, welche durch das Verhaltensprofil definiert sind, welches dem bestimmten Vorrichtungsverhalten zugeordnet ist, ferner Folgendes umfasst:
Identifizieren von Anwendungen (206), welche auf der mobilen Vorrichtung (100) ausführbar sind, während die mobile Vorrichtung (100) mit dem IVIS (150) verbunden ist; und
Abrufen weiterer Inhalte für den Sperrbildschirm (200) auf der Anzeige (110) der mobilen Vorrichtung (100), derart, dass der angezeigte Sperrbildschirm (200) femerdie Anwendungen (206) identifiziert.

4. Verfahren nach Anspruch 1, wobei das Verfahren, basierend auf der einen oder den mehreren Aktionen, welche durch das Verhaltensprofil definiert sind, welches dem bestimmten Vorrichtungsverhalten zugeordnet ist, ferner Folgendes umfasst:
Empfangen von Daten von dem IVIS (150); und
Abrufen weiterer Inhalte für den Sperrbildschirm (200) auf der Anzeige (110) der mobilen Vorrichtung (100), derart, dass der angezeigte Sperrbildschirm (200) femerdie Daten präsentiert, welche von dem IVIS (150) empfangen wurden.

5. Verfahren nach Anspruch 1, wobei die Vorrichtungskopplungs-Identitätsinformationen ferner einen oder mehrere Parameter umfassen, ausgewählt aus: einem Hersteller, einem Modell, einem Jahr und einer Verpackung.

6. Verfahren nach Anspruch 5, wobei mindestens ein Teil der Vorrichtungskopplungs-Identitätsinformationen bestimmt wird, indem ein Benutzer der mobilen Vorrichtung aufgefordert wird, einen oder mehrere Parameter auszuwählen.

7. Verfahren nach Anspruch 1, wobei das Verfahren, basierend auf der einen oder den mehreren Aktionen, welche durch das Verhaltensprofil definiert sind, welches dem bestimmten Vorrichtungsverhalten zugeordnet ist, ferner Folgendes umfasst:
Abrufen von Inhalten für den Sperrbildschirm (200) auf der Anzeige (110) der mobilen Vorrichtung (100), derart, dass der angezeigte Sperrbildschirm (200) femerein Logo (202) eines Autoherstellers umfasst, welcherdurch die Vorrichtungskopplungs-Identitätsinformationen identifiziert ist.

8. Verfahren nach einem der Ansprüche 1 bis 7, wobei das Verbinden der mobilen Vorrichtung (100) mit dem IVIS (150) drahtlos ausgeführt wird.

9. Verfahren nach Anspruch 8, wobei das Verbinden der mobilen Vorrichtung mit dem IVIS über Bluetooth® ausgeführt wird.

10. Verfahren nach Anspruch 8, wobei das Verbinden der mobilen Vorrichtung mit dem IVIS über Wi-Fi® Direct ausgeführt wird.

11. Drahtlose Vorrichtung (100), welche ausgebildet ist, um das Verfahren nach einem der vorhergehenden Ansprüche auszuführen.

12. Nichtflüchtiges computerlesbares Medium (104), welches computerlesbaren Code einschließt, wobei der Code, wenn durch einen Prozessor (102) einer mobilen Vorrichtung (100) ausgeführt, veranlasst, dass die mobile Vorrichtung (100) das Verfahren nach einem der Ansprüche 1 bis 10 ausführt.

## Revendications

1. Procédé mis en œuvre sur un dispositif mobile (100), comprenant :
la réception d'un identifiant de dispositif IVIS associé à un système d'infodivertissement embarqué, IVIS, (150) lors de l'appariement initial de l'IVIS avec le dispositif mobile ;
la détermination et le stockage, au niveau du dispositif mobile, des informations d'identité de dispositif apparié associées à l'identifiant de dispositif IVIS ;
la connexion (502) du dispositif mobile (100) à l'IVIS (150) ;
la récupération (504) des informations d'identité de dispositif apparié stockées associées à l'identifiant de dispositif IVIS (302) reçu de l'IVIS (150) ;
en réponse à la récupération des informations d'identité de dispositif apparié, la détermination (506) d'un comportement de dispositif mobile à partir des informations d'identité de dispositif appairé récupérées, le comportement de dispositif déterminé étant associé à un profil de comportement, le profil de comportement définissant une ou plusieurs actions à effectuer par le dispositif mobile lorsqu'il est apparié à l'IVIS (150) ;
sur la base de l'action ou des actions définies par le profil de comportement associé au comportement de dispositif déterminé :
l'identification de services disponibles (204) du dispositif mobile (100) qui sont accessibles par l'intermédiaire de l'IVIS (150) sur la base des services identifiés dans le profil de comportement ;
la récupération d'un contenu pour un écran de verrouillage (200) sur un afficheur (110) du dispositif mobile (100) lorsqu'il est connecté à l'IVIS (150), l'écran de verrouillage (200) identifiant les services disponibles (204) ; et
l'affichage de l'écran de verrouillage (200) sur l'afficheur (110) du dispositif mobile (100).

2. Procédé selon la revendication 1, le procédé comprenant en outre, sur la base de l'action ou des actions définies par le profil de comportement associé au comportement de dispositif déterminé :
la désactivation d'applications du dispositif mobile (100) non requises pendant que le dispositif mobile (100) est connecté à l'IVIS (150).

3. Procédé selon la revendication 1, le procédé comprenant en outre, sur la base de l'action ou des actions définies par le profil de comportement associé au comportement de dispositif déterminé :
l'identification d'applications (206) qui peuvent être exécutées sur le dispositif mobile (100) pendant que le dispositif mobile (100) est connecté à l'IVIS (150) ; et
la récupération d'un contenu supplémentaire pour l'écran de verrouillage (200) sur l'afficheur (110) du dispositif mobile (100), de sorte que l'écran de verrouillage affiché (200) identifie en outre les applications (206).

4. Procédé selon la revendication 1, le procédé comprenant en outre, sur la base de l'action ou des actions définies par le profil de comportement associé au comportement de dispositif déterminé :
la réception de données provenant de l'IVIS (150) ; et
la récupération d'un contenu supplémentaire pour l'écran de verrouillage (200) sur l'afficheur (110) du dispositif mobile (100), de sorte que l'écran de verrouillage affiché (200) présente en outre les données reçues de l'IVIS (150).

5. Procédé selon la revendication 1, selon lequel les informations d'identité de dispositif apparié comprennent en outre un ou plusieurs paramètres choisis parmi : un fabricant, un modèle, une année et un emballage.

6. Procédé selon la revendication 5, selon lequel au moins une partie des informations d'identité de dispositif apparié est déterminée en invitant un utilisateur du dispositif mobile à sélectionner un ou plusieurs paramètres.

7. Procédé selon la revendication 1, le procédé comprenant en outre, sur la base de l'action ou des actions définies par le profil de comportement associé au comportement de dispositif déterminé :
la récupération d'un contenu pour l'écran de verrouillage (200) sur l'afficheur (110) du dispositif mobile (100), de sorte que l'écran de verrouillage affiché (200) comprend en outre un logo (202) d'un fabricant automobile identifié par les informations d'identité de dispositif apparié.

8. Procédé selon l'une quelconque des revendications 1 à 7, selon lequel la connexion du dispositif mobile (100) à l'IVIS (150) est effectuée sans fil.

9. Procédé selon la revendication 8, selon lequel la connexion du dispositif mobile à l'IVIS est effectuée par Bluetooth®.

10. Procédé selon la revendication 8, selon lequel la connexion du dispositif mobile à l'IVIS est effectuée par Wi-Fi® direct.

11. Dispositif sans fil (100) conçu pour exécuter le procédé selon l'une quelconque des revendications précédentes.

12. Mémoire non transitoire lisible par ordinateur (104) sur laquelle est incorporé un code lisible par ordinateur, le code, lorsqu'il est exécuté par un processeur (102) d'un dispositif mobile (100), amenant le dispositif mobile (100) à exécuter le procédé selon l'une quelconque des revendications 1 à 10.
